# EUROPEAN PATENT APPLICATION

(11) **EP 4 700 583 A1**
(43) Date of publication of application: **25.02.2026**
(21) Application number: 25190856.2
(22) Date of filing: 22.07.2025
(51) Int. Cl.: G06F 11/14, G06F 11/20

(54) **FAULT AND ATTACK TOLERANT ELECTRONIC HARDWARE USING REPROGRAMMABLE LOGIC WITH SOFTWARE OVER THE AIR SUPPORT**

(30) Priority: 20.08.2024 US 202418809684
(71) Applicant: NXP B.V., 5656 AG Eindhoven (NL)
(72) Inventor: More, Shailesh Shyam, 5656AG Eindhoven (NL)
(74) Representative: Colaiuda, Antonella

(57) **Abstract**

A method, system, apparatus, and architecture are provided for managing faults in a data processing system having multiple data processing subsystems, including a resource reallocation management subsystem which responds to a notification of a faulty resource by isolating the faulty resource and requesting an over-the-air (OTA) update from an external system controller to provide update code which is received and stored at a flash memory, and then used to reconfigure a spare resource subsystem which is connected to the data processing system by reprogramming the interconnect manager at the interconnect bus.

## Description

### BACKGROUND OF THE INVENTION

### Field of the Invention

The present disclosure is directed in general to the field of data processing. In one aspect, the present disclosure relates to methods and systems for managing hardware and/or software faults in data processing systems.

### Description of the Related Art

Increasing levels of system integration have resulted in more and more processor cores and resources being bundled on a single chip. These processor cores have multiple applications being executed at the same time. With such system designs where multiple applications are integrated on the same chip and working concurrently, there is an increase in the number of faults in the chip. Fault handling challenges only increase with system architectures which combine multiple system-on-chip (SoC) devices into a single networked platform. For example, future vehicle architectures will need to accommodate on single platform complex functions (e.g., serviced oriented vehicle smart capabilities and highly personalized functions, extended car connectivity features, etc.) with autonomous driving requirements where safety, security and availability play a central role. In the case of permanent random failures that arise in system hardware, this can result in system inoperability, necessitating an offline service to get the faulty electronic hardware replaced. This results in a loss of revenue and inconvenience to the owner of the electronic hardware. Likewise, vulnerabilities can be discovered in system software, such as security algorithms, which makes the electronic hardware vulnerable to hacks that can threaten or damage safety, privacy, and financial information. While there are error detection and correction systems which seek to detect and correct errors using an embedded programmed field programmable gate array (FPGA) to debug the development code of logic functions, such as microprocessor IC logic functions, such systems are typically not designed to fix hardware and/or software faults that can occur more broadly within the SoC integrated circuit.

As seen from the foregoing, the existing fault management systems are extremely difficult at a practical level by virtue of the challenges with providing fault handling on complex SoC and system of system designs which meet the applicable performance, design simplicity, reliability, safety complexity and cost constraints.

### BRIEF DESCRIPTION OF THE DRAWINGS

The present invention may be understood, and its numerous objects, features and advantages obtained, when the following detailed description of a preferred embodiment is considered in conjunction with the following drawings.

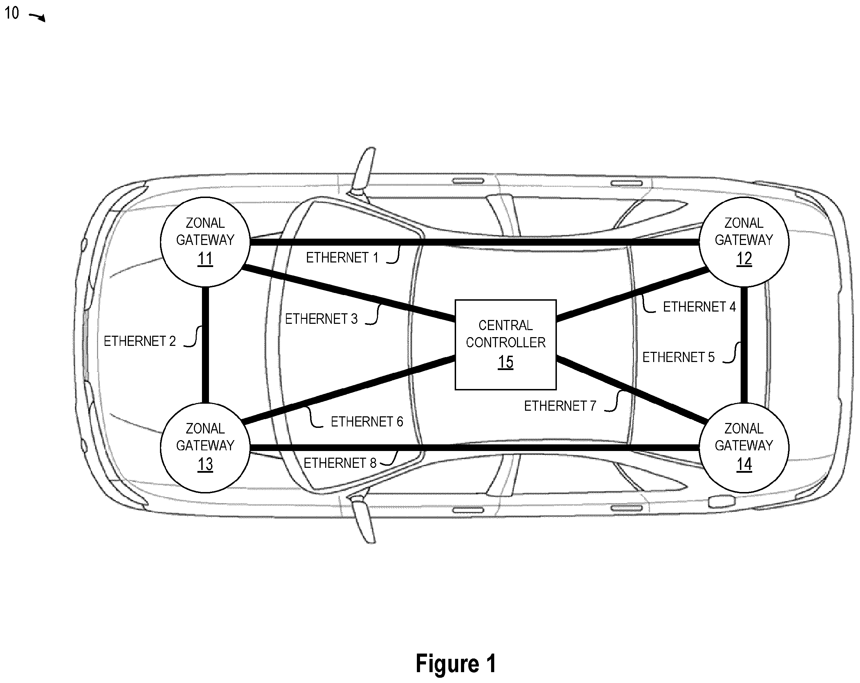

Figure 1 depicts a simplified plan view of a vehicle which employs a zonal controller architecture with multiple zonal gateways connected to a central controller to ensure that various sensors, systems, controllers, and communications systems are performing safely and reliably.

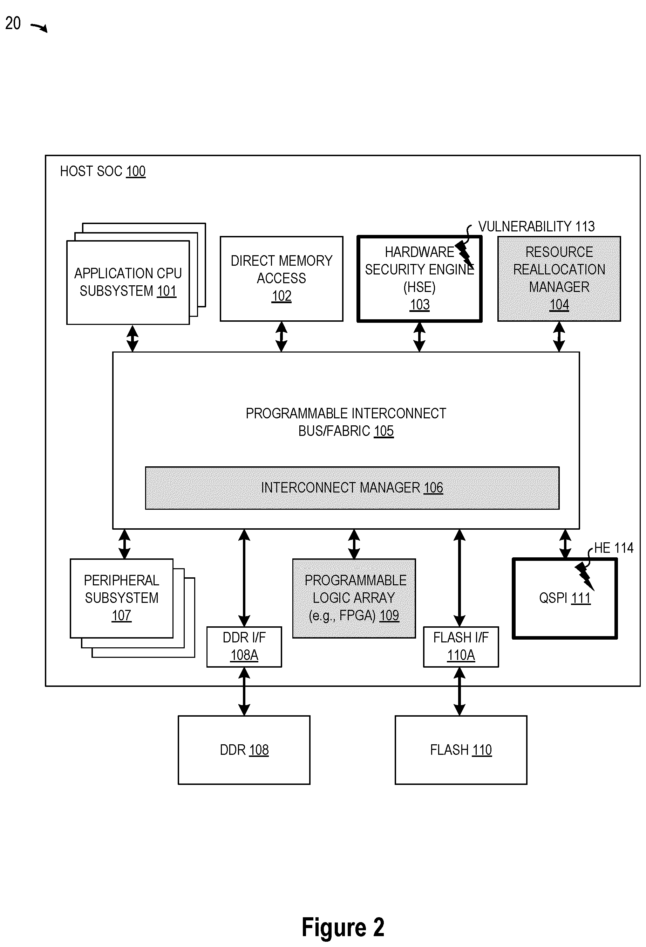

Figure 2 depicts a simplified top-level system view of a failure and/or attack tolerant data processing system having a programmable logic and interconnect for dynamically performing a safe reallocation or reconfiguration in case of detecting a faulty or vulnerable resource in accordance with selected embodiments of the present disclosure.

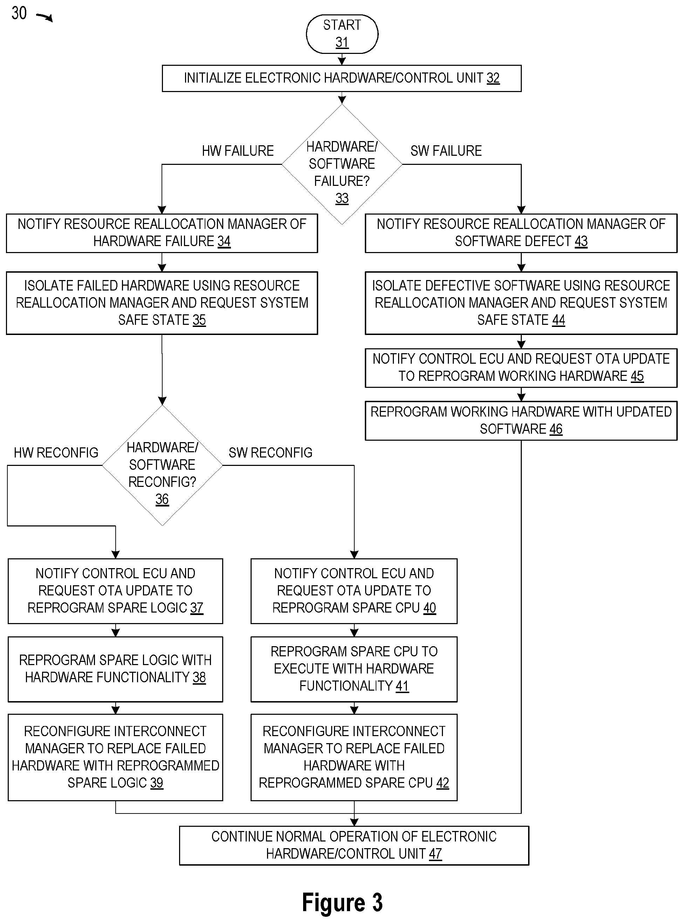

Figure 3 illustrates an example logic flow diagram illustrating the operation of a failure and/or attack tolerant methodology which uses an over the air software update to reconfigure a programmable logic array and internal bus interface in accordance with selected embodiments of the present disclosure.

### DETAILED DESCRIPTION

A fault and attack tolerant system, apparatus, method, and program code are described for handling hardware/software faults and/or vulnerabilities by reprogramming a spare logic array and internal bus interface to effectively isolate and replace the functionality of the hardware/software faults and/or vulnerabilities. In selected embodiments, a detected permanent hardware fault is handled by detecting and isolating the hardware fault, requesting a system safe state which would depend on the criticality of the detected fault or vulnerability, requesting an over-the-air (OTA) software update to re-program the spare logic array (in the case of a hardware reconfiguration) or spare processing unit (in the case of a software reconfiguration), and executing the OTA software update to effectively replace the faulty hardware with the re-programmed spare logic array (in the case of a hardware reconfiguration) or the re-programmed spare processing unit (in the case of a software reconfiguration), reconfiguring the system interconnect to replace the faulty hardware with the re-programmed logic array/spare processing unit , and then requesting the system to continue normal operation of the ECU. In addition, or in the alternative, an identified hardware vulnerability in a security hardware device that is otherwise working may be handled by detecting and isolating the hardware vulnerability in the security hardware device, and then requesting an OTA software update to reprogram the spare programmable logic array (hardware reconfiguration). Another option is to move the security function of the security hardware device to a spare CPU by programming the CPU (software reconfiguration). By using OTA software updates to reprogram the spare logic array, spare processing unit, or security hardware device, the disclosed fault and attack tolerant system, apparatus, method, and program code can extend the operational life of an electronic hardware and the system in which hardware/software faults and/or vulnerabilities are detected, thereby reducing the need to repair or replace a faulty part. In addition, the disclosed fault and attack tolerant system, apparatus, method, and program code provides an offline hardware reconfiguration scheme which offers advantages in terms of simplicity, reliability, safety and cost-efficiency, but may also be used with application scenarios where delayed response and short downtimes are acceptable.

At the core of the disclosed fault and attack tolerant System-on-Chip (SoC) is a programmable spare logic array (e.g., field programmable gate array (FPGA) and/or spare central processing unit (CPU) which is connected to a resource reallocation manager unit (RRMU) over a programmable interconnect bus having an interconnect manager unit (IMU) which comprise programmable hardware units which are connected and configured to administer the SoC to achieve fault-tolerant operations by using OTA software updates to reprogram system resources to replace any detected hardware fault or software fault or vulnerability. Upon detection of a permanent fault or vulnerability, the RRMU is notified. In response, the RRMU isolates the impacted hardware or software, and then determines whether a hardware or software reprogramming action is required. It additionally informs the system to enter a system safe state.

If hardware reprogramming is required, the RRMU requests a partial or complete reprogramming of the spare logic array and the programmable interconnect bus (via the IMU). In selected embodiments, the hardware reprogramming may be implemented by issuing an OTA software request to the SoC. Once reprogrammed with the OTA software update, the IMU connects the spare logic array over the programmable interconnect bus to replace the faulty hardware. However, if software reprogramming is required, the RRMU may be configured to move the impacted hardware task to software by reprogramming the available spare CPU. In selected embodiments, the software reprogramming may be implemented by issuing an OTA software request to the SoC. In addition, the RRMU may request reprogramming of the programmable interconnect bus (via the IMU). Once the spare CPU and interconnect bus are reprogrammed, the spare CPU is connected over the programmable interconnect bus to replace the faulty hardware. In yet other embodiments where a new hardware device (e.g.., a communication interface) is added to the SoC, the RRMU may use the programmable spare logic array to reprogram the new hardware device before connection over the programmable interconnect bus (via the IMU) to the rest of the SoC. It additionally informs the system to return to normal operation.

To provide a contextual understanding of the disclosed fault and attack tolerant system, apparatus, method, and program code, reference is now made to Figure 1 which depicts a simplified plan view of a vehicle 10 which employs a zonal controller architecture with multiple zonal gateways 11-14 connected to a central controller 15 (a.k.a., the brain) to ensure that various sensors, systems, controllers, and communications systems are performing safely and reliably. Each zonal gateway or controller (e.g., 11) is a vehicle node that segments the electrical and electronic architecture and serves as a hub for all of the power distribution and data connection requirements for devices - the various sensors, peripherals and actuators - within a physical section or zone of the vehicle 10. In addition, the central controller 15 may be implemented as a vehicle server that optimizes the computational resources by consolidating the number of physical ECUs, reducing H/W components, wiring results in less weight and overall cost reduction. Each zonal gateway 11-14 is connected to the central computing cluster 15 at the heart of the vehicle 10 using a main backbone interface, such as an automotive harness or automotive Ethernet 1-8. As a result, this inter-zonal communication can take place over a small, high-speed networking cable that greatly reduces both the quantity and size of the cables that must be installed around the vehicle.

In the automotive sector, SoC designs increasingly host multiple control applications that were originally developed as independent Electronic Control Units (ECUs). Automotive vendors tend to implement zonal architecture in cars because it saves costs and weight. A zonal architecture requires control functions to be implemented close to the physical function locations. A zonal controller therefore hosts several ECU functions that were previously controlled from independent ECUs. In order to reduce the likelihood of a harm to humans in the case of a failure, automotive ECUs are subjected to functional safety standards, such as ISO 26262 [ISO11], [ISO18] which is the international functional safety standard for the development of electrical and electronic systems in road vehicles. Under such existing standards, an ECU that experiences a fault will be brought gracefully to a safe state. However, in accordance with the present disclosure, the objective is to make the ECU fault-tolerant by reprogramming suitable replacement hardware or software resource(s) to ensure the critical functions still work on failure.

Hosting several virtual ECUs (vECUs) on a single SoC (and thus on a single physical ECU) poses additional challenges for fault management. For example, the ISO 26262 standard requires that every ECU reduces the occurrence of dangerous failures to an acceptable level. Faults can be detected by both hardware and software detection mechanisms. The scope of fault effects can be different and thus different need to be the scopes of the respective reactions. However, in accordance with the present disclosure, detected hardware/software faults and/or vulnerabilities can be handled by reprogramming a spare logic array and internal bus interface to effectively isolate and replace the functionality of the hardware/software faults and/or vulnerabilities.

As will be appreciated by those skilled in the art, each of the central controller 15 and zonal gateway 11-14 may be implemented with an ECU SoC which has sub-SoC hardware components where permanent random hardware failures and/or vulnerabilities can occur. Each ECU SoC also also has software components where systematic software failures and/or vulnerabilities can occur. To overcome such hardware or software failures or vulnerabilities and others known to those skilled in the art, there is disclosed herein a fault tolerant architecture which uses re-programmable logic and interconnect bus with over the air (OTA) support to isolate failing hardware, and which obtains an OTA software update to reprogram an SoC feature (e.g., a spare logic array, spare processing unit, or security hardware device) so that the faulty hardware or software resource is replaced by the reprogrammed feature and correctly connected to SoC over the reprogrammed interconnect bus.

To provide additional details for an improved contextual understanding of the present disclosure, reference is now made to Figure 2 which depicts a simplified top-level system view 20 of a data processing system on a chip (SoC) 100 which includes programmable logic array (e.g., FPGA) 109 and interconnect bus or fabric 105 for dynamically performing a safe reallocation or reconfiguration in case of detecting a hardware/software error 114 or vulnerability 113 at a SoC resource. The depicted host SoC 100 includes processor functions and resources 101-111, including one or more application central processing unit (CPU) subsystems 101, direct memory access (DMA) subsystem 102, and hardware security engine (HSE) subsystem 103 connected over a programmable interconnect communication bus or fabric 105 to one or more peripheral subsystems 107, and one or more external memory interface subsystems, such as a double data rate (DDR) RAM I/F 108A, Flash memory I/F 110A, and/or Quad Serial Peripheral Interface (QSPI) subsystem 111. Each SoC subsystem block is bi-directionally connected to the programmable interconnect bus/fabric 105. In turn, the external memory interface subsystems may be connected to external memory, such as DDR memory 108 or flash memory 110.

In selected embodiments, the data processing SoC 100 may be implemented as circuitry on a single integrated circuit. In addition, the application CPU subsystem(s) 101 may be any type of processing circuit, including but not limited to a microprocessor (MPU), microcontroller (MCU), digital signal processor (DSP), or another type of processor or processor core. In addition, the HSE subsystem 103 may be a Cryptographic Services Engine subsystem which has its own exclusive system resources and connects to the host application CPU subsystem(s) 101 via the programmable interconnect bus/fabric 105. In addition, the programmable interconnect bus/fabric 105 can be any type of bus structure, including but not limited to an advanced high-performance bus (AHB) or an advanced peripheral bus (APB). In addition, the one or more peripheral subsystems 107 may include a random-access memory (RAM) and/or one or more peripheral devices or special-purpose processors to control peripheral units, such as for example, a direct memory access (DMA) peripheral, communication interfaces, timers, encoders/decoders, etc.

As disclosed herein and described more fully hereinbelow, the depicted host SoC 100 includes a resource reallocation manager subsystem 104 which is connected over the programmable interconnect communication bus/fabric 105 to manage the allocation of SoC hardware and/or software resources in the event of a detected hardware/software fault or vulnerability. In addition, the depicted SoC 100 includes a programmable logic array 109, such as a field programmable gate array (FPGA), which is connected over the programmable interconnect communication bus/fabric 105 to provide spare programmable logic which the resource reallocation manager 104 uses to manage the allocation of SoC hardware and/or software resources in the event of a detected hardware/software fault or vulnerability. In addition, the depicted SoC 100 includes a programmable interconnect manager subsystem 106 in the programmable interconnect communication bus/fabric 105 which may be programmed by the resource reallocation manager 104 to isolate any faulty or vulnerable SoC resources, such as by switching OFF or disabling a resource clock or interface signal sent over the programmable interconnect communication bus/fabric 105. In addition, the programmable interconnect manager subsystem 106 may be programmed by the resource reallocation manager 104 to replace the faulty or vulnerable SoC resource(s) with a reprogrammed resource, such as by enabling a resource clock or interface signal sent over the programmable interconnect communication bus/fabric 105 to the reprogrammed resource.

As described more fully hereinbelow, the depicted resource reallocation manager subsystem 104 may be embodied as a subsystem within the data processing SoC 100, but it may instead be embodied as a standalone microprocessor. However embodied, the resource reallocation manager subsystem 104 may be implemented as a deterministic hardware state machine or a composition of software and hardware (e.g., firmware) executing on one or more dedicated CPU cores 101 to implement control logic to enable fault and attack tolerant operation by repairing or replacing a faulty SoC resource. In accordance with the present disclosure, the resource reallocation manager subsystem 104 may include resource reallocation control logic that is configured to receive a notification that a permanent hardware fault or vulnerability is detected in the SoC 100. In response, the resource reallocation control logic may be configured to isolate the impacted hardware and to determine whether hardware reprogramming or software reprogramming is required.

For example, in a situation where there is faulty logic caused by a permanent random hardware fault or error (HE) 114 that is detected at an SoC subsystem (e.g., the QSPI subsystem 111), the resource reallocation manager subsystem 104 responds to a notification of the hardware fault 114 by isolating the affected SoC subsystem, such as by switching OFF the QSPI clock signal and disabling the QSPI interface using the interconnect manager 106. In addition, the resource reallocation manager subsystem 104 will send a fault notification to the overall system controller (e.g., central control ECU 15) to request a safe reaction and OTA software update to partially or completely reprogram the available programmable logic array 109 to provide the functionality of the faulty logic at the affected SoC subsystem. In the depicted example, the resource reallocation manager subsystem 104 requests an OTA software update to reprogram the programmable logic array 109 with an FPGA image to provide the functionality of the faulty logic at the QSPI subsystem 111. Once the programmable logic array 109 receives the FPGA image via the OTA software update, the resource reallocation manager subsystem 104 may issue a reconfiguration command to both the programmable logic array 109 and the interconnect manager 106 to enable the programmable logic array 109 to provide the QSPI interface and functionality to the rest of the SoC 100 (including routing of signals connected to the SoC external interfaces), thereby replacing the faulty QSPI subsystem 111 with the reprogrammed logic array 109.

In another example situation where there is a faulty logic caused by a hardware vulnerability 113 at an SoC subsystem (e.g., the HSE subsystem 103), the resource reallocation manager subsystem 104 may receive a notification of the vulnerability 113. For example, an OTA software update may be provided which specifies that the SHA-2 logic in the HSE subsystem 103 has a vulnerability 113. In response to the notification, the resource reallocation manager subsystem 104 may isolate the affected SoC subsystem, such as by switching OFF the HSE clock signal, disabling the HSE interface using the interconnect manager 106 and/or reconfiguring the application CPU subsystem 101. In addition, the resource reallocation manager subsystem 104 will send a fault notification to the overall system controller (e.g., central control ECU 15) to request a safe reaction and OTA software update to move the impacted hardware task (e.g., HSE 103) to software by reprogramming a spare CPU subsystem 101 to provide the enhanced or strengthened functionality of the logic of the vulnerable SoC subsystem. In the depicted example, the resource reallocation manager subsystem 104 requests an OTA software update to reprogram the flash 110 with a firmware image for a stronger security software (e.g., updated SHA-2 logic with new encryption/decryption program code). Once the flash 110 receives the firmware image via the OTA software update, the resource reallocation manager subsystem 104 may issue a reconfiguration command to both the flash 110 and the interconnect manager 106 to provide the reprogrammed CPU subsystem 101 with the stronger security software to the rest of the SoC 100, thereby replacing the vulnerable HSE subsystem 103 with the reprogrammed CPU subsystem 101.

In another example situation, the resource reallocation manager subsystem 104 may be used to add a new hardware feature to the SoC 100. For example, if a new communication interface subsystem (not shown) having digital inputs and outputs and a new protocol is being added the SoC 100, the resource reallocation manager subsystem 104 may request an OTA software update to reprogram the programmable logic array 109 with an FPGA image for the communication interface subsystem. Once the programmable logic array 109 receives the FPGA image, the resource reallocation manager subsystem 104 may issue a reconfiguration command to both the programmable logic array 109 and the interconnect manager 106 to have the programmable logic array 109 provide the new communication interface subsystem to the rest of the SoC 100 (including routing of signals connected to the SoC external interfaces).

To provide additional details for an improved understanding of selected embodiments of the present disclosure, reference is now made to Figure 3 which illustrates a simplified flow chart 4 showing example SoC control logic for the processing step 31-47 for operating a failure and/or attack tolerant system which uses an over the air software update to reconfigure a programmable logic array and internal bus interface in the event of a resource failure or vulnerability. In the flow diagram 30, the processing starts at step 31, such as when a SoC is powered up or activated. Once activated, the SoC detects a failure of a hardware or software resource at the SoC at step 33. In selected embodiments, the failure detection step 33 can detect a permanent hardware fault or identified hardware vulnerability at one of the SoC resources, such as by using any suitable error detection techniques and/or receiving an OTA update which identifies a vulnerability in one of the SoC resource.

In the event that a hardware failure is detected at step 33, the SoC control logic notifies the resource reallocation manager about the hardware failure at step 34. In selected embodiments, the notification step 34 can be provided by one of the SoC resources, a central controller (e.g., overall system controller 15), or by an OTA software update message provided to the resource reallocation manager. In addition, the resource reallocation manager isolates the failed hardware and requests a system safe state at step 35. In selected embodiments, the hardware isolation step 35 can be performed by the resource reallocation manager which programs the interconnect manager at the programmable interconnect to switch off the clock and/or disable the interface to the failed hardware.

At step 36, the SoC control logic determines whether a hardware reconfiguration or software reconfiguration step is required to address the detected hardware failure. If a hardware reconfiguration is required, the SoC control logic notifies the control ECU (e.g., central control ECU 15) and requests that an OTA update be provided to reprogram a spare logic array on the SoC at step 37. In selected embodiments, the notification and request step 37 can be provided by the resource reallocation manager. At step 38, the spare logic array is reprogrammed with the hardware functionality which remedies the hardware failure. In selected embodiments, the reallocation manager performs the reprogramming step 38 to program the spare logic array with an update image provided by the OTA update. At step 39, the interconnect manager in the programmable interconnect is reconfigured to replace the failed hardware with the reprogrammed spare logic. In selected embodiments, the reallocation manager performs the reconfiguration step 39 to route SoC communications over the programmable interconnect so that signals originally intended for the failed hardware are instead routed to the reprogrammed spare logic array.

On the other hand, if the SoC control logic determines at step 36 that a software reconfiguration step is required, the SoC control logic notifies the control ECU (e.g., central control ECU 15) and requests that an OTA update be provided to reprogram a spare CPU resource at step 40. In selected embodiments, the notification and request step 40 can be provided by the resource reallocation manager. At step 41, the spare CPU resource is reprogrammed to execute the hardware functionality which remedies the hardware failure. In selected embodiments, the reallocation manager performs the reprogramming step 41 to program the spare CPU resource array with an update image provided by the OTA update that is stored in flash memory 110. At step 42, the interconnect manager in the programmable interconnect is reconfigured to replace the failed hardware with the reprogrammed CPU resource. In selected embodiments, the reallocation manager performs the reconfiguration step 42 to route SoC communications over the programmable interconnect so that signals originally intended for the failed hardware are instead routed to the reprogrammed CPU resource.

Referring back to failure detection step 33, in the event that a software failure is detected, the SoC control logic notifies the reallocation manager about the software defect or vulnerability at step 43. In selected embodiments, the notification step 43 can be provided by one of the SoC resources, a central controller (e.g., overall system controller 15), or by an OTA software update message provided to the reallocation manager. In addition, the reallocation manager isolates the defective/vulnerable software and requests a system safe state at step 44. In selected embodiments, the software isolation step 44 can be performed by the resource reallocation manager which programs the interconnect manager at the programmable interconnect to switch off the clock and/or disable the interface to the defective software, or by reconfiguring the CPU which is running the defective software. At step 45, the SoC control logic notifies the control ECU (e.g., central control ECU 15) and requests that an OTA update be provided to reprogram the working hardware on the SoC. In selected embodiments, the notification and request step 45 can be provided by the resource reallocation manager. At step 46, the working hardware is reprogrammed with updated software stored in flash 110 which remedies the software failure. In selected embodiments, the reallocation manager performs the reprogramming step 46 to program the working hardware with an update image provided by the OTA update.

At step 47, the SoC control logic continues the normal operation of the SoC electronic hardware/control unit after the hardware/software faults and/or vulnerabilities have been effectively removed by reprogramming the spare logic array (or spare CPU) and interconnect manager to isolate and replace the functionality of the hardware/software faults and/or vulnerabilities. Since it will take some time for the OTA update and reconfiguration to take place, in this period, the system shall maintain the safe state.

By now it should be appreciated that there has been provided a method, architecture, circuit, and system-on-chip for managing faults in a data processing system which includes a plurality of data processing subsystems connected over an interconnect bus. In the disclosed method, a resource reallocation management subsystem of the data processing system receives a notification of a faulty resource at one of the data processing subsystems. In selected embodiments, the resource reallocation management subsystem receives an OTA update identifying a vulnerable resource at one of the data processing subsystems. In other embodiments, the resource reallocation management subsystem receives a notification of a permanent random hardware fault at one of the data processing subsystems. In addition, the resource reallocation management subsystem isolates the faulty resource by programming an interconnect manager at the interconnect bus to disconnect the faulty resource from the data processing system. In selected embodiments, the resource reallocation management subsystem isolates the faulty resource by programming the interconnect manager at the interconnect bus to switch off or disable a resource clock or interface signal sent over the interconnect bus to the faulty resource. In addition, the resource reallocation management subsystem requests an over-the-air (OTA) update from an external system controller to provide update code. In addition, the resource reallocation management subsystem receives OTA update code from the external system controller. In addition, the resource reallocation management subsystem stores the OTA update code at flash memory. In addition, the resource reallocation management subsystem reconfigures a spare resource subsystem at the data processing system with the OTA update code stored at the flash memory, thereby generating a reconfigured spare resource subsystem. In selected embodiments, the resource reallocation management subsystem reconfigures the spare resource subsystem by reconfiguring a spare logic array at the data processing system with the OTA update code. In other selected embodiments, the resource reallocation management subsystem reconfigures the spare resource subsystem by reconfiguring a spare central processing unit (CPU) subsystem at the data processing system with the OTA update code. In other selected embodiments, the resource reallocation management subsystem reconfigures the spare resource subsystem by reconfiguring a new hardware device added to the data processing system with the OTA update code. In addition, the resource reallocation management subsystem reprograms the interconnect manager at the interconnect bus to connect the reconfigured spare resource subsystem with the data processing system.

In another form, there has been provided a method, apparatus, program code, architecture, and circuit for managing faults in a data processing system. The disclosed data processing system includes an interconnect bus having a programmable interconnect manager which is configured to control connections over the interconnect bus. In addition, the disclosed data processing system includes a plurality of data processing subsystems connected to the interconnect bus. The disclosed data processing system also includes a resource reallocation management subsystem that is configured with resource reallocation control logic and connected over the interconnect bus to the plurality of data processing subsystems. In addition, the disclosed data processing system includes a flash memory device connected to the interconnect bus. As disclosed, the resource reallocation management subsystem is configured to receive a notification of a faulty resource at one of the data processing subsystems. In addition, the resource reallocation management subsystem is configured to isolate the faulty resource by programming the interconnect manager to disconnect the faulty resource from the data processing system. The resource reallocation management subsystem is also configured to request an over-the-air (OTA) update from an external system controller to provide update code. In addition, the resource reallocation management subsystem is configured to receive OTA update code from the external system controller. The resource reallocation management subsystem is also configured to store the OTA update code at the flash memory device. In addition, the resource reallocation management subsystem is configured to reconfigure a spare resource subsystem at the data processing system with the OTA update code stored at the flash memory device, thereby generating a reconfigured spare resource subsystem. The resource reallocation management subsystem is also configured to reprogram the interconnect manager at the interconnect bus to connect the reconfigured spare resource subsystem with the data processing system. In selected embodiments, the resource reallocation control logic is configured to receive the notification of the faulty resource by receiving an OTA update identifying a vulnerable resource at one of the data processing subsystems. In other selected embodiments, the resource reallocation control logic is configured to receive the notification of the faulty resource by receiving a notification of a permanent random hardware fault at one of the data processing subsystems. In other selected embodiments, the resource reallocation control logic is configured to isolate the faulty resource by programming the interconnect manager to switch off or disable a resource clock or interface signal sent over the interconnect bus to the faulty resource. In other selected embodiments, the resource reallocation control logic is configured to reconfigure the spare resource subsystem by reconfiguring a spare logic array at the data processing system with the OTA update code. In other selected embodiments, the resource reallocation control logic is configured to reconfigure the spare resource subsystem by reconfiguring a spare central processing unit (CPU) subsystem at the data processing system with the OTA update code. In other selected embodiments, the resource reallocation control logic is configured to reconfigure the spare resource subsystem by reconfiguring a new hardware device added to the data processing system with the OTA update code.

In yet another form, there has been provided a fault and attack tolerant method, apparatus, program code, architecture, and circuit for operating a System-on-Chip (SoC) device which includes a resource reallocation management subsystem and a plurality of SoC subsystems integrated on a shared semiconductor substrate and coupled together over a programmable interconnect bus. The disclosed method includes programming, by the resource reallocation management subsystem, the programmable interconnect bus to disconnect a faulty resource at one of the pluralities of SoC subsystems from the SoC device. In selected embodiments, the programmable interconnect bus may be programmed by programming an interconnect manager at the programmable interconnect bus to switch off or disable a resource clock or interface signal sent over the programmable interconnect bus to the faulty resource. The disclosed method also includes receiving, by the resource reallocation management subsystem, over-the-air (OTA) programming code for storage at flash memory connected to the SoC device. In addition, the disclosed method includes reconfiguring, by the resource reallocation management subsystem, a spare resource subsystem at the SoC device with the OTA programming code stored at the flash memory, thereby generating a reconfigured spare resource subsystem. In selected embodiments, the spare resource subsystem may be reconfigured by reconfiguring a spare logic array at the SoC device with the OTA programming code. In other selected embodiments, the spare resource subsystem may be reconfigured by reconfiguring a spare central processing unit (CPU) subsystem at the SoC device with the OTA programming code. **In** other selected embodiments, the spare resource subsystem may be reconfigured by reconfiguring a new hardware subsystem added to the SoC device with the OTA programming code. The disclosed method also includes reprogramming, by the resource reallocation management subsystem, the programmable interconnect bus to connect the reconfigured spare resource subsystem with the SoC device to replace the faulty resource at one of the data processing subsystems. **In** selected embodiments, the disclosed method may also include receiving, at the resource reallocation management subsystem, a notification of the faulty resource at one of the data processing subsystems.

The block diagrams in the figures illustrate the architecture, functionality, and operation of possible implementations of systems, methods, and computer program products according to various embodiments of the present invention. In this regard, each block in the block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams, and combinations of blocks in the block diagrams, can be implemented by special purpose hardware-based systems that perform the specified functions or acts, or combinations of special purpose hardware and computer instructions.

While particular embodiments of the present invention have been shown and described, it will be obvious to those skilled in the art that, based upon the teachings herein, that changes and modifications may be made without departing from this invention and its broader aspects. Therefore, the appended claims are to encompass within their scope all such changes and modifications as are within the scope of this invention. Furthermore, it is to be understood that the invention is solely defined by the appended claims. It will be understood by those with skill in the art that if a specific number of an introduced claim element is intended, such intent will be explicitly recited in the claim, and in the absence of such recitation no such limitation is present. For non-limiting example, as an aid to understanding, the following appended claims contain usage of the introductory phrases "at least one" and "one or more" to introduce claim elements. However, the use of such phrases should not be construed to imply that the introduction of a claim element by the indefinite articles "a" or "an" limits any particular claim containing such introduced claim element to inventions containing only one such element, even when the same claim includes the introductory phrases "one or more" or "at least one" and indefinite articles such as "a" or "an"; the same holds true for the use in the claims of definite articles. As will be appreciated by one skilled in the art, aspects of the present invention may be embodied as a system, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages, including an object-oriented programming language such as Java, Smalltalk, C++ or the like and conventional procedural programming languages, such as the "C" programming language or similar programming languages.

Aspects of the present invention are described hereinabove with reference to block diagrams of methods, apparatus (systems) and computer program products according to embodiments of the invention. It will be understood that each block of the block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. In certain implementations, a system on a chip or SOC may be implemented.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Although the described exemplary embodiments disclosed herein focus on example fault and attack tolerant system for reprogramming a spare logic array or CPU resource and internal bus interface to effectively isolate and replace the functionality of the hardware/software faults and/or vulnerabilities, the present invention is not necessarily limited to the example embodiments illustrate herein. For example, various embodiments of using reprogrammable spare logic arrays and internal bus interface managers may be applied in any suitable fault handling systems, and not just automotive vehicle systems, and may use additional or fewer circuit components than those specifically set forth. Thus, the particular embodiments disclosed above are illustrative only and should not be taken as limitations upon the present invention, as the invention may be modified and practiced in different but equivalent manners apparent to those skilled in the art having the benefit of the teachings herein. Accordingly, the foregoing description is not intended to limit the invention to the particular form set forth, but on the contrary, is intended to cover such alternatives, modifications and equivalents as may be included within the scope of the invention as defined by the appended claims so that those skilled in the art should understand that they can make various changes, substitutions and alterations without departing from the scope of the invention in its broadest form.

Benefits, other advantages, and solutions to problems have been described above with regard to specific embodiments. However, the benefits, advantages, solutions to problems, and any element(s) that may cause any benefit, advantage, or solution to occur or become more pronounced are not to be construed as a critical, required, or essential feature or element of any or all the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for managing faults in a data processing system comprising a plurality of data processing subsystems connected over an interconnect bus, comprising:
receiving, at the resource reallocation management subsystem of the data processing system, a notification of a faulty resource at one of the data processing subsystems;
isolating, by the resource reallocation management subsystem, the faulty resource by programming an interconnect manager at the interconnect bus to disconnect the faulty resource from the data processing system;
requesting, by the resource reallocation management subsystem, an over-the-air (OTA) update from an external system controller to provide update code;
receiving, by the resource reallocation management subsystem, OTA update code from the external system controller;
storing, by the resource reallocation management subsystem, the OTA update code at a flash memory;
reconfiguring, by the resource reallocation management subsystem, a spare resource subsystem at the data processing system with the OTA update code stored at the flash memory, thereby generating a reconfigured spare resource subsystem; and
reprogramming, by the resource reallocation management subsystem, the interconnect manager at the interconnect bus to connect the reconfigured spare resource subsystem with the data processing system.

2. The method of claim 1, where receiving the notification of the faulty resource comprises receiving an OTA update identifying a vulnerable resource at one of the data processing subsystems.

3. The method of claim 1 or claim 2, where receiving the notification of the faulty resource comprises receiving a notification of a permanent random hardware fault at one of the data processing subsystems.

4. The method according to any preceding claim, where isolating the faulty resource comprises programming the interconnect manager at the interconnect bus to switch off or disable a resource clock or interface signal sent over the interconnect bus to the faulty resource.

5. The method according to any preceding claim, where reconfiguring the spare resource subsystem comprises reconfiguring a spare logic array at the data processing system with the OTA update code.

6. The method according to any preceding claim, where reconfiguring the spare resource subsystem comprises reconfiguring a spare central processing unit (CPU) subsystem at the data processing system with the OTA update code.

7. The method according to any preceding claim, where reconfiguring the spare resource subsystem comprises reconfiguring a new hardware device added to the data processing system with the OTA update code.

8. A data processing system comprising:
an interconnect bus comprising a programmable interconnect manager which is configured to control connections over the interconnect bus;
a plurality of data processing subsystems connected to the interconnect bus;
a resource reallocation management subsystem connected over the interconnect bus to the plurality of data processing subsystems; and
a flash memory device connected to the interconnect bus;
where the resource reallocation management subsystem is configured with resource reallocation control logic to:
receive a notification of a faulty resource at one of the data processing subsystems;
isolate the faulty resource by programming the interconnect manager to disconnect the faulty resource from the data processing system;
request an over-the-air (OTA) update from an external system controller to provide update code;
receive OTA update code from the external system controller;
store the OTA update code at the flash memory device;
reconfigure a spare resource subsystem at the data processing system with the OTA update code stored at the flash memory device, thereby generating a reconfigured spare resource subsystem; and
reprogram the interconnect manager at the interconnect bus to connect the reconfigured spare resource subsystem with the data processing system.

9. The data processing system of claim 8, where the resource reallocation control logic is configured to receive the notification of the faulty resource by receiving an OTA update identifying a vulnerable resource at one of the data processing subsystems.

10. The data processing system of claim 8 or claim 9, where the resource reallocation control logic is configured to receive the notification of the faulty resource by receiving a notification of a permanent random hardware fault at one of the data processing subsystems.

11. The data processing system according to any of claims 8 to 10, where the resource reallocation control logic is configured to isolate the faulty resource by programming the interconnect manager to switch off or disable a resource clock or interface signal sent over the interconnect bus to the faulty resource.

12. The data processing system according to any of claims 8 to 11, where the resource reallocation control logic is configured to reconfigure the spare resource subsystem by reconfiguring a spare logic array at the data processing system with the OTA update code.

13. The data processing system according to any of claims 8 to 12, where the resource reallocation control logic is configured to reconfigure the spare resource subsystem by reconfiguring a spare central processing unit (CPU) subsystem at the data processing system with the OTA update code.

14. The data processing system according to any of claims 8 to 13, where the resource reallocation control logic is configured to reconfigure the spare resource subsystem by reconfiguring a new hardware device added to the data processing system with the OTA update code.
